# EUROPEAN PATENT SPECIFICATION

(11) **EP 3 628 155 B1**
(45) Date of publication and mention of the grant of the patent: **29.07.2020**
(21) Application number: 18196547.6
(22) Date of filing: 25.09.2018
(51) Int. Cl.: A01N 25/04, A01N 33/02, A01N 35/02, A01N 35/04, A01N 37/02, A01P 1/00

(54) **ANTIBACTERIAL COMPOSITES AND METHOD FOR MANUFACTURING THE SAME**
ANTIBAKTERIELLE VERBUNDPRODUKTE UND VERFAHREN ZU IHRER HERSTELLUNG
COMPOSITES ANTIBACTÉRIENS ET PROCÉDÉ DE FABRICATION

(43) Date of publication of application: 01.04.2020
(73) Proprietor: Su, Ting-Hung, 103 Taipei City (TW)
(72) Inventor: TSAI, Tsung-Lin, 701 Tainan City (TW); HO, Chia-Cheng, 814 Kaohsiung City (TW); WANG, Hao-Chen, 702 Tainan City (TW); SU, Ting-Hung, 103 Taipei City (TW)
(74) Representative: 2K Patentanwälte Blasberg Kewitz & Reichel

(56) References cited:
- EP-A2- 2 940 080
- US-A1- 2006 188 537
- CHI-HSIEN LIU ET AL: "In Vitro Anti-Propionibacterium Activity by Curcumin Containing Vesicle System", CHEMICAL & PHARMACEUTICAL BULLETIN, vol. 61, no. 4, 1 January 2013 (2013-01-01), pages 419-425, XP55107402, ISSN: 0009-2363, DOI: 10.1248/cpb.c12-01043
- BUTT UMMARA ET AL: "Fatty acid microemulsion for the treatment of neonatal conjunctivitis: quantification, characterisation and evaluation of antimicrobial activity", DRUG DELIVERY AND TRANSLATIONAL RESEARCH, SPRINGER, GERMANY, vol. 6, no. 6, 20 October 2016 (2016-10-20), pages 722-734, XP036092779, ISSN: 2190-393X, DOI: 10.1007/S13346-016-0338-3 [retrieved on 2016-10-20]
- NARANG ET AL: "Stable drug encapsulation in micelles and microemulsions", INTERNATIONAL JOURNAL OF PHARMACEUTICS, ELSEVIER, NL, vol. 345, no. 1-2, 13 November 2007 (2007-11-13), pages 9-25, XP022342756, ISSN: 0378-5173, DOI: 10.1016/J.IJPHARM.2007.08.057
- SANDRA GARCÍA-GALLEGO ET AL: "Function Oriented Molecular Design: Dendrimers as Novel Antimicrobials", MOLECULES, vol. 22, no. 10, 21 September 2017 (2017-09-21), pages 1581:1-1581:29, XP55516580, DOI: 10.3390/molecules22101581
- L. ZHANG ET AL: "Development of Nanoparticles for Antimicrobial Drug Delivery", CURRENT MEDICINAL CHEMISTRY, vol. 17, no. 6, 1 February 2010 (2010-02-01), pages 585-594, XP55516428, NL ISSN: 0929-8673, DOI: 10.2174/092986710790416290
- XIAO-YAN XUE ET AL: "A potent and selective antimicrobial poly(amidoamine) dendrimer conjugate with LED209 targeting QseC receptor to inhibit the virulence genes of gram negative bacteria", NANOMEDICINE: NANOTECHNOLOGY, BIOLOGY AND MEDICINE, vol. 11, no. 2, 1 February 2015 (2015-02-01), pages 329-339, XP55516627, NL ISSN: 1549-9634, DOI: 10.1016/j.nano.2014.09.016
- DANIEL SHADRACK ET AL: "Synthesis of Polyamidoamine Dendrimer for Encapsulating Tetramethylscutellarein for Potential Bioactivity Enhancement", INTERNATIONAL JOURNAL OF MOLECULAR SCIENCES, vol. 16, no. 11, 4 November 2015 (2015-11-04), pages 26363-26377, XP55516984, DOI: 10.3390/ijms161125956
- MA ET AL: "Evaluation of polyamidoamine (PAMAM) dendrimers as drug carriers of anti-bacterial drugs using sulfamethoxazole (SMZ) as a model drug", EUROPEAN JOURNAL OF MEDICINAL CHEMI, EDITIONS SCIENTIFIQUE ELSEVIER, PARIS, FR, vol. 42, no. 1, 9 February 2007 (2007-02-09), pages 93-98, XP005874901, ISSN: 0223-5234, DOI: 10.1016/J.EJMECH.2006.07.015
- KATARZYNA WINNICKA ET AL: "The Effect of PAMAM Dendrimers on the Antibacterial Activity of Antibiotics with Different Water Solubility", MOLECULES, vol. 18, no. 7, 22 July 2013 (2013-07-22), pages 8607-8617, XP55516983, DOI: 10.3390/molecules18078607
- CHENG ET AL: "Polyamidoamine (PAMAM) dendrimers as biocompatible carriers of quinolone antimicrobials: An in vitro study", EUROPEAN JOURNAL OF MEDICINAL CHEMISTRY, EDITIONS SCIENTIFIQUE ELSEVIER, PARIS, FR, vol. 42, no. 7, 1 July 2007 (2007-07-01), pages 1032-1038, XP022117526, ISSN: 0223-5234, DOI: 10.1016/J.EJMECH.2006.12.035
- JONATHAN GARDINER ET AL: "PAMAM dendrimers for the delivery of the antibacterial Triclosan", JOURNAL OF ENZYME INHIBITION AND MEDICINAL CHEMISTRY, vol. 23, no. 5, 1 January 2008 (2008-01-01), pages 623-628, XP55460155, GB ISSN: 1475-6366, DOI: 10.1080/14756360802205257
- PERLSTEIN MY ET AL: "Structural effects on cosolubilization of dendrimer and propofol in water dilutable microemulsions as delivery vehicle", COLLOIDS AND SURFACES A: PHYSIOCHEMICAL AND ENGINEERING ASPECTS, ELSEVIER, AMSTERDAM, NL, vol. 497, 9 March 2016 (2016-03-09), pages 257-264, XP029489578, ISSN: 0927-7757, DOI: 10.1016/J.COLSURFA.2016.03.016

## Description

### BACKGROUND OF THE INVENTION

### Field of the Invention

The present invention relates to an antibacterial composite, wherein an antibacterial material is encapsulated by a microemulsion to combine with a dendrimer and the antibacterial composite is applied to general plastic substrate to improve the antibacterial effect.

### Description of Prior Art

Dendrimers are highly branched polymers, which have an internal cavity, and also a large number of functional groups on the surface for modification. Dendrimers are modified via surface modification of functionalization of functional groups such as PEGylation, acetylation glycosylation and amino acids to neutralize the cation charge on the surface and improve the biocompatibility and biodegradability of dendritic macromolecules. According to the structure of dendrimers, the internal cavity is hydrophobic or non-polar and the external cavity is hydrophilic, similar to the property of surfactant, dendrimers emulsify water and oil. In addition, the largest feature is that both the special functional groups on the surface and the internal pores of dendrimers can be combined with different kinds of materials, for example, antibacterial materials, plastid DNA, nucleotides and antibodies to form stable composites. Dendrimers are used in many applications, such as material delivery, gene therapy, diagnostic imaging, and increasing solubility of insoluble drugs.

Microemulsion is a three-phase heat-resistant homogeneous liquid consisting of oil phase, water phase and surfactants. The appearance is usually translucent to transparent, can be easily stirred and prepared without high shear method used in general emulsion. The water phase may have one or more salts and/or other water-soluble components; and the oil phase can actually be a mixture of oil, an olefin and other water-insoluble materials, or a complex water-insoluble mixture. The two immiscible phases (water and oil) both exist with the surfactant. The surfactant molecules form a single layer at the interface between oil and water and the hydrophobic tail of the surfactant molecule dissolves in the oil phase and the hydrophilic head group of the surfactant dissolves in the water phase. Several significant features of the present invention are the solubility is increased and water-insoluble antibacterial material are stabilize and the antibacterial capability is improved; also the costs are low, no high energy consumption equipment are required, and the present invention can be applied to cosmetics and pharmaceutical and other industries.

Since antibacterial materials have to contact with bacteria to react, mixing the antibacterial composite and the plastic substrate may block the release of antibacterial materials in the antibacterial composite. Accordingly, increasing the concentration of the antibacterial composite effectively improve the efficiency of the antibacterial reaction.

In the review of existing papers and based on own experience, there was no application available to encapsulate antibacterial materials in a microemulsion to combine with a dendrimer and place them into dendrimers as antibacterial and anti-fungal products. Therefore, in order to promote the industry development and improve life quality, the feasibility of adding the antibacterial composite in the plastic substrate is studied and the technology according to the present invention is concluded.

The encapsulation of antimicrobial agents into microemulsions or the coupling of antimicrobial agents to dendrimers or the complexation therewith is generally known from the prior art, e.g. as disclosed BUTT UMMARA ET AL: "Fatty acid microemulsion for the treatment of neonatal conjunctivitis: quantification, characterisation and evaluation of antimicrobial activity", DRUG DELIVERY AND TRANSLATIONAL RESEARCH, SPRINGER, GERMANY, vol. 6, no. 6, 20 October 2016 (2016-10-20), pages 722-734, ISSN: 2190-393X, DOI : 10.1 007/S13346-016-0338-3 . However, such products are provided different purposes, for example with the purpose of increasing skin penetration, improving solubilities, controlling release of the antimicrobial agent or generally improving the bioavailability, but not for the provision of antibacterial surface coatings of plastic substrates.

EP 2 940 080 A2 discloses a dendrimeric polymer which has been functionalized to possess quaternary ammonium groups which convey an antimicrobial effect. These polymers are useful for coating surfaces of various materials and may also be incorporated into material to achieve an antimicrobial effect on the surface of said materials. However, this antibacterial composite is not based on a microemulsion and does not use encapsulated benzaldehyde and/or cinnamaldehyde or mixtures thereof as antimicrobial agents.

### SUMMARY OF THE INVENTION

In terms of the above mentioned disadvantages, the objective of the present invention is to provide an antibacterial composite for providing a plastic substrate with an antibacterial effect.

This problem is solved by an antibacterial composite applied to a plastic substrate as claimed by claim 1 and by a method for manufacturing such an antibacterial composite as claimed by claim 2. Further advantageous embodiments are the subject-matter of the dependent claims.

### BRIEF DESCRIPTION OF DRAWING

The features of the present disclosed examples are set forth with particularity in the appended claims. The present disclosed examples, however, may be best understood by reference to the following detailed description of the present disclosed examples, which describes an exemplary embodiment of the present disclosed examples, taken in conjunction with the accompanying drawings, in which:
Fig. 1 is a manufacturing flowchart of an antibacterial composite in a preferred embodiment of the present invention; and
Fig. 2 is a manufacturing flowchart of an antibacterial composite in another preferred embodiment of the present invention.

### DETAILED DESCRIPTION OF THE INVENTION

In cooperation with attached drawings, the technical contents and detailed description of present disclosed examples are described thereinafter according to a preferable embodiment, being not used to limit its executing scope.

An embodiment of the present disclosure is related to an antibacterial composite; wherein an antibacterial material is encapsulated by a microemulsion to form the microemulsion having the antibacterial material and embedded into a dendrimer, and the amount of the weight ratio of the dendrimer as a carrier and the antibacterial material is 1:1-10:1 for inhibiting harmful bacteria, the antibacterial materials within are slowly released, and only a low concentration required to significantly inhibit bacteria growth. Specifically, merging the microemulsion having the antibacterial materials into a dendrimer refers to modification technology wherein the microemulsion having the antibacterial conjugates to the dendrimer, or the microemulsion having the antibacterial material in the dendrimer.

An embodiment is related to an antibacterial composite applied to a plastic substrate, wherein an antibacterial material is encapsulated by a microemulsion to form the microemulsion having the antibacterial material for inhibiting harmful bacteria, and the microemulsion having the antibacterial material is combined with a dendrimer. Due to the hydrophilic/hydrophobic differences between the antibacterial composite and the plastic substrate, the antibacterial composite is retained on the surface of the plastic substrate so as to increase the surface concentration of the antibacterial composite on the plastic substrate to improve the antibacterial effect. In an embodiment, the oil face of the microemulsion is a water-insoluble antibacterial material, or other highly hydrophobic material; the water phase is reverse osmosis water; the skeleton of the surfactant and the cosurfactant is a long carbon chain, the endpoint carries anions or carries no charge. The dendrimer is a material with multiple amine groups (-NH₂). The oil phase applicable to the embodiment is a single material or a mixture of benzaldehyde and cinnamaldehyde; the surfactant is dodecanoic acid (lauric acid), or alkyl glycoside; the cosurfactant is dodecylbenzenesulfonic acid or its salt compounds; and the dendrimers are polyamidoamine dendrimers (PAMAM dendrimers).

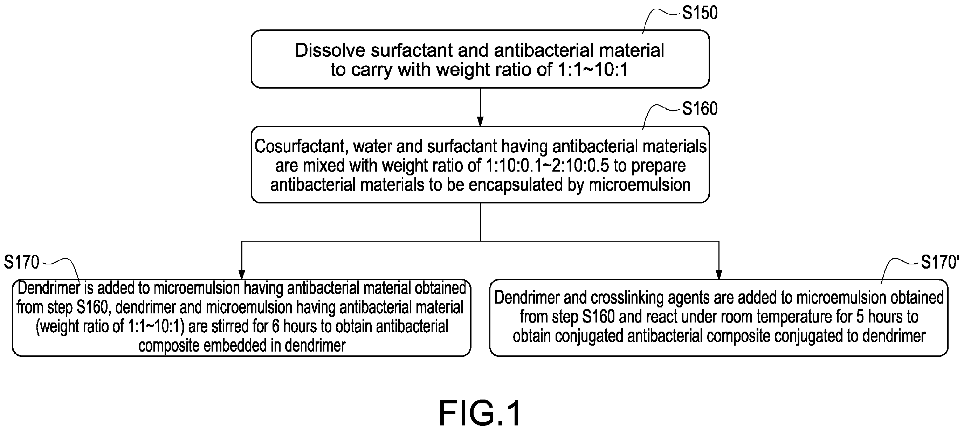

The method for manufacturing an antibacterial composite according to the present invention is detailed in the following description. As shown in figure 1, the method for manufacturing an antibacterial composite includes: step S150, dissolving the surfactant and the antibacterial material to carry with the amount of a weight ratio of 1:1-10:1. In an embodiment, the surfactant was lauric acid and the antibacterial material is a hydrophobic antibacterial material of cinnamaldehyde. In step S150, the lauric acid and the hydrophobic antibacterial material cinnamaldehyde are mixed with the amount of the weight ratio of 10:1 under the temperature 50 °C-70°C and heated until dissolved in order to prepare the surfactant having antibacterial materials. Among which, when the heating temperature is closer to 60 °C, the dissolving effect is better, and the heating temperature of 60°C generates the best dissolving effect.

In the second embodiment, the surfactant was lauric acid and alkyl glycoside, and the antibacterial material is a hydrophobic antibacterial material of cinnamaldehyde. In step S150, the lauric acid and the alkyl glycoside and the hydrophobicity antibacterial material of cinnamaldehyde are mixed with the amount of a weight ratio of 3:2:1, the organic solvents to dissolve the hydrophobic antibacterial materials are added in advance such as propylene glycolmethyl ether acetate, dimethyl sulfoxide (DMSO), dimethyl formamide (DMF), etc. to prepare the surfactant having antibacterial materials.

In the third embodiment, the surfactant is alkyl glycoside, and the antibacterial materials are a mixture of cinnamaldehyde and benzaldehyde. In step S150, the lauric acid and the mixture of the cinnamaldehyde and the benzaldehyde are mixed with the amount of a weight ratio of 1:1, the organic solvents to dissolve the hydrophobic antibacterial materials are added in advance such as dimethyl sulfoxide (DMSO), dimethyl formamide (DMF) or the mixture of propylene glycol monomethyl ether and succinic acid to prepare the surfactant having antibacterial materials.

Next, proceed to step S160, the cosurfactant, water and the surfactant having the antibacterial materials are mixed with a weight ratio of 1:10:0.1-2:10:0.5 and are stirred for 1 to 2 hours to ensure that the microemulsion reaction is completed to prepare the antibacterial materials to be encapsulated by the microemulsion. In an embodiment, the cosurfactant is dodecylbenzenesulfonic or its salt compounds. Among which, when the stirring time is closer to 2 hours, the mixing effect is better, and stirring time for two hours generates the best mixing effect.

In an example, lastly, the method proceeds to step S170. In step S170, a dendrimer is added to the microemulsion having the antibacterial material obtained from the step S160. The dendrimer and microemulsion having the antibacterial material with the amount of a weight ratio of 1:1-10:1 are stirred for 6 hours to make the microemulsion having the antibacterial material embedded in the dendrimer to obtain the antibacterial composite embedded in the dendrimer. In one embodiment, the dendrimer is a PAMAM dendrimer. Among which, when the weight ratio of the dendrimer and the microemulsion having the antibacterial material is closer to 1:1, the bacteria inhibiting effect is better, and when the weight ratio of the dendrimer and the microemulsion having the antibacterial material is 1:1, the bacteria inhibiting effect is best optimized.

In an example, lastly, the method proceeds to step S170'. In step S170', a dendrimer and crosslinking agents are added to the microemulsion obtained from the step S160 and react under room temperature for 5 hours to make the microemulsion conjugate to the dendrimer to obtain the conjugated antibacterial composite. In an embodiment, the crosslinking agents are mixtures of 3-(ethyliminomethyleneamino)-N,N-dimethyl-propan-1-amine and N-hydroxy diimide, and the dendrimer is a PAMAM dendrimer.

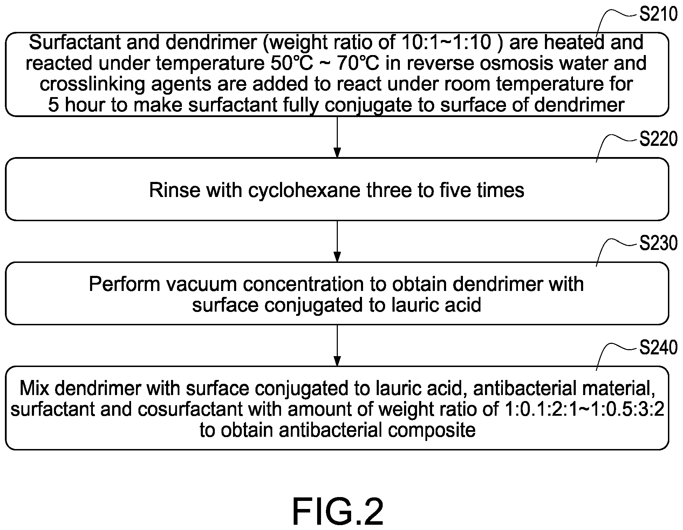

Refer Fig. 2, a manufacturing method of another antibacterial composite is illustrated. The difference between Fig. 2 and Fig. 1 is that the surfactant is conjugated to the surface of the dendrimer. Firstly, the manufacturing method in which the surfactant is conjugated to the surface of the dendrimer includes the following steps S210 to S230: in an embodiment, in step S210, the surfactant and the dendrimer with a weight ratio of 10:1-1:10 are heated and react under temperature 50°C - 70°C in reverse osmosis water and crosslinking agents are added to react under room temperature for 5 hour to make the surfactant fully conjugate to the surface of the dendrimer. Among which, when the weight ratio of the surfactants and the dendrimer is closer to 10:1 and the heating temperature is closer to 60 °C, the conjugating effect of the surfactant to the surface of the dendrimer is better. When the weight ratio of the surfactants and the dendrimer is 10:1 and the heating temperature is 60 °C, the conjugating effect of the surfactant to the surface of the dendrimer is the best.

In one embodiment, the crosslinking agents are a mixture of 1-ethyl-3-(3-dimethylamine) carboimides and n-hydroxybutyldiimides, the long carbon chain molecule of the surfactant was lauric acid, and the dendrite is a PAMAM dendrimer. Next, proceed to step S220, after the surfactant, the dendrimer and the crosslinking agents are fully reacted in step S210, the mixture is rinsed with cyclohexane three to five times in step S220. Next, proceed to step S230, perform vacuum concentration to obtain a dendrimer with the surface conjugated to a lauric acid.

Next, proceed to step S240, mix the dendrimer with the surface conjugated to the lauric acid, an antibacterial material, a surfactant and a cosurfactant with the amount of a weight ratio of 1:0.1:2:1-1:0.5:3:2 to obtain the antibacterial composite. Specifically, in one embodiment, the surfactant and the cosurfactant are added to the antibacterial material, and reverse osmosis water is added, then continue to stir for 5 hours, and lastly add the dendrimer with the surface conjugated to the lauric acid and continue to stir for 18 hours to obtain the antibacterial composite. Among which, the hydrophobic materials are cinnamaldehyde or a mixture of benzaldehyde and cinnamaldehyde, and the surfactant is alkyl glycoside, and the cosurfactant is dodecylbenzenesulfonic or its salt compounds. Among which, when the mixing amount of the weight ratio of the dendrimer with the surface conjugated to the lauric acid, antibacterial material to carry, the surfactant and the cosurfactant is closer to 1:0.5:3:2, the bacteria inhibiting effect is better. When the mixing amount of the weight ratio mixing of the dendrimer with the surface conjugated to the lauric acid, antibacterial material to carry, the surfactant and the cosurfactant is 1:0.5:3:2, the bacteria inhibiting effect is optimized.

The experiment data of the antibacterial composites according to the present invention are listed below. The following Table 1 is the test results of antibacterial composites embedded in the dendrimer. The following Table 2 is the test results of antibacterial composites conjugated to the dendrimer with the surface of the surfactant.

**Table 1 is the test results of antibacterial composites embedded in the dendrimer.**

| | Dendrimers: Microemulsion | | | |
|---|---|---|---|---|
| | 10:1 | 5:1 | 3:1 | 1:1 |
| | Antibacterial diameter (mm) | | | |
| Escherichia coli (ATCC8739) | 9.5-11 | 10-14 | 13-17 | 19-23 |
| Staphylococcus aureus (ATCC6538p) | 10-13 | 12.5-16 | 15-18 | 20-23 |
| Klebsiella pneumonia (ATCC4352) | 8.5-9. 5 | 11-13 | 12.5-17 | 18.5-22 |

Table 1 is the test results of bacteria inhibiting effects of the antibacterial material on the Escherichia coli, Staphylococcus aureus and Klebsiella pneumoniae under the condition that the weight ratio of Dendrimer:Microemulsion is 10:1, 5:1, 3:1 and 1:1. Based on the test results and compare with the conditions of the bacteria inhibiting effects, when the mixing weight ratio is 10:1, the antibacterial activity is poor (an antibacterial diameter less than 10mm indicates that the antibacterial activity is not significant). When the mixing weight ratio is 5:1, the antibacterial composite at least has mild to moderate antibacterial activity (an antibacterial diameter between 10-11mm indicates that the antibacterial activity is mild). When the mixing weight ratio is 3:1, the antibacterial composite at least has moderate to high antibacterial activity (an antibacterial diameter between 11-15mm indicates that the antibacterial activity is moderate). When the mixing weight ratio is 1:1, the antibacterial composite at least has high antibacterial activity (an antibacterial diameter more than 15mm indicates that the antibacterial activity is high). It can be concluded that when the weight ratio of the dendrimer and the microemulsion having the antibacterial material is closer to 1:1, the bacteria inhibiting effect is better.

**Table 2 is the test results of antibacterial composites conjugated to the dendrimer with the surface of the surfactant.**

| | Conjugate dendrimer: Antibacterial material: Surfactant: Co-surfactant | | |
|---|---|---|---|
| | 1:0.1:2:1 | 1:0.4:2:2 | 1:0.5:3:2 |
| | Antibacterial diameter (mm) | | |
| Escherichia coli (ATCC8739) | 10.5-12 | 16.5-19 | 18-22 |
| Staphylococcus aureus (ATCC6538p) | 12-14.5 | 17-20 | 20-24 |
| Klebsiella pneumoniae (ATCC4352) | 10-11.5 | 12-16 | 19-21 |

Table 2 is the test results of bacteria inhibiting effects of the antibacterial material on the Escherichia coli, Staphylococcus aureus and Klebsiella pneumoniae under the condition that the weight ratio of Conjugate dendrimer:Antibacterial material:Surfactant:Cosurfactant is 1:0.1:2:1, 1:0.4:2:2 and 1:0.5:3:2. Based on the test results and compare with the conditions of the bacteria inhibiting effects, when the mixing weight ratio is 1:0.1:2:1, the antibacterial composite at least has mild to moderate antibacterial activity (an antibacterial diameter between 10-11mm indicates that the antibacterial activity is mild). When the mixing weight ratio is 1:0.4:2:2, the antibacterial composite at least has moderate to high antibacterial activity (an antibacterial diameter between 11-15mm indicates that the antibacterial activity is moderate). When the mixing weight ratio is 1:0.5:3:2, the antibacterial composite at least has high antibacterial activity (an antibacterial diameter more than 15mm indicates that the antibacterial activity is high). It can be concluded that when the mixing amount of the weight ratio of the dendrimer with the surface conjugated to the lauric acid, antibacterial material to carry, the surfactant and the cosurfactant is closer to 1:0.5:3:2, the bacteria inhibiting effect is better.

In summary, one or more embodiments of the present invention have at least one of the following advantages:
1. According to the present invention, an antibacterial material is encapsulated by a microemulsion to form the microemulsion having the antibacterial material, and the microemulsion having the antibacterial material is combined with a dendrimer. Due to the hydrophilic/hydrophobic differences between the antibacterial composite and the plastic substrate, the purpose to retain the antibacterial composite on the surface of the plastic substrate is achieved and the surface concentration of the antibacterial composite on the plastic substrate is increased to improve the antibacterial effect;
2. According to the present invention, an antibacterial material is encapsulated by a microemulsion and combined with a dendrimer, when the antibacterial composite mixed with a plastic substrate, the release of the antibacterial material in the antibacterial composite is blocked and as a result the antibacterial material is released slowly, and only a low concentration required to significantly inhibit bacteria growth;
3. According to the present invention, an antibacterial material is encapsulated by a microemulsion, the solubility is increased and water-insoluble antibacterial material are stabilize and the antibacterial capability is improved; and
4. According to the present invention, the technology to encapsulate an antibacterial material by a microemulsion is simple and easy to manufacture, which provides advantages such as the costs are low, no high energy consumption equipment is required, and the present invention can be used in cosmetics, pharmaceuticals and other industries .

## Claims

1. An antibacterial composite applied to a plastic substrate, the antibacterial composite material being added to a plastic substrate and the antibacterial composite material comprising an antibacterial material, wherein the antibacterial material is encapsulated by a microemulsion to form the microemulsion having the antibacterial material, and the microemulsion having the antibacterial material is combined with a dendrimer via a merging technique, an amount of a weight ratio of the dendrimer and the microemulsion having the antibacterial material being 1:1-10:1; wherein the merging technique is a conjugate combination technique or an embedding technique, the conjugate combination technique enables the microemulsion having the antibacterial material to conjugate to the dendrimer, or the embedding technique enables the microemulsion having the antibacterial material to embeds in the dendrimer; wherein
the microemulsion comprises a cosurfactant, water and a surfactant;
the cosurfactant is a dodecylbenzenesulfonic acid or its salt compounds and the surfactant is lauric acid or alkyl glycoside;
the antibacterial material is selected from the group consisting of benzaldehyde and cinnamaldehyde and mixtures thereof; and
the dendrimer is a PAMAM dendrimer.

2. A method for manufacturing an antibacterial composite according to claim 1, comprising the following steps:
(a) dissolving a surfactant (S150) and an antibacterial material to be carried with a weight ratio of 1:1 to 10:1 to prepare a surfactant having the antibacterial material;
(b) mixing a cosurfactant, water and the surfactant having he antibacterial material with an amount of a weight ratio of 1:10:0.1-2:10:0.5, and stir to react for 1 to 2 hours to prepare a microemulsion (S160) having the antibacterial material; and
(c) merging the microemulsion having the antibacterial material into a dendrimer via a merging technique to prepare the antibacterial composite (S170); wherein
the merging technique is an embedding technique;
the embedding technique adds the dendrimer to the microemulsion having the antibacterial material, and the amount of the weight ratio of the dendrimer and the microemulsion having the antibacterial material is 1:1-10:1,
the embedding technique stirs for 6 hours to embed the microemulsion having the antibacterial material in the dendrimer to obtain the antibacterial composite.

3. A method for manufacturing an antibacterial composite according to claim 1, comprising the following steps:
(a) dissolving a surfactant (S150) and an antibacterial material to be carried with a weight ratio of 1:1 to 10:1 to prepare a surfactant having the antibacterial material;
(b) mixing a cosurfactant, water and the surfactant having he antibacterial material with an amount of a weight ratio of 1:10:0.1-2:10:0.5, and stir to react for 1 to 2 hours to prepare a microemulsion (S160) having the antibacterial material; and
(c) merging the microemulsion having the antibacterial material into a dendrimer via a merging technique to prepare the antibacterial composite (S170); wherein
the merging technique is a conjugate combination technique; wherein
the merging technique adds the dendrimer and crosslinking agents to the microemulsion having the antibacterial material and reacts at room temperature for 5 hours to enable the microemulsion having the antibacterial material to conjugate to the dendrimer.

4. The manufacturing method for antibacterial composites of claim 3, wherein the crosslinking agents are 3-(ethyliminomethyleneamino)-N,N-dimethyl-propan-1-amine and N-hydroxysuccinimide.

5. A method for manufacturing an antibacterial composite according to claim 1, comprising the following steps:
(a) heating and stirring lauric acid and a dendrimer with the amount of the weight ratio of 10:1-1:10
in reverse osmosis water at temperature 50 °C - 70 °C, adding a crosslinking agent to react at room temperature for 5 hours to enable the lauric acid to conjugated to the surface of the dendrimer (S210);
(b) rinsing with cyclohexane repeatedly for three to five times and performing vacuum concentration to obtain a dendrimer with a surface conjugated to the lauric acid (S220).
(c) mixing the dendrimer with the surface conjugated to the lauric acid, an antibacterial material, a surfactant and a cosurfactant with an amount of a weight ratio of 1:0.1:2:1-1:0.5:3:2 to obtain the antibacterial composite (S230);
wherein step (c) comprises:
(cl) adding the surfactant and the cosurfactant to the antibacterial material, and adding reverse osmosis water, continuously stirring for 5 hours, then adding the dendrimer with the surface conjugated to the lauric acid and continuously stirring for 18 hours to obtain the antibacterial composite;
wherein the surfactant is alkyl glycoside, and the cosurfactant is dodecylbenzenesulfonic or its salt compounds.

6. The manufacturing method for antibacterial composites of claim 5, wherein the crosslinking agents are 3-(ethyliminomethyleneamino)-N,N-dimethyl-propan-1-amine and N-hydroxysuccinimide.

## Patentansprüche

1. Antibakterieller Verbundstoff, der auf ein Kunststoffsubstrat aufgebracht ist, wobei das antibakterielle Verbundstoff einem Kunststoffsubstrat zugegeben wird und der antibakterielle Verbundstoff ein antibakterielles Material umfasst, wobei das antibakterielle Material durch eine Mikroemulsion eingekapselt ist, um die Mikroemulsion mit dem antibakteriellen Material zu bilden, und wobei die Mikroemulsion mit dem antibakteriellen Material mit einem Dendrimer über ein Verschmelzungsverfahren verbunden ist, wobei das Gewichtsverhältnis des Dendrimers und der Mikroemulsion mit dem antibakteriellen Material 1:1-10:1 beträgt; wobei das Verschmelzungsverfahren ein Konjugat-Verbindungsverfahren oder ein Einbettungsverfahren ist, wobei das Konjugat-Verbindungsverfahren es der Mikroemulsion mit dem antibakteriellen Material ermöglicht, sich mit dem Dendrimer zu konjugieren, oder wobei das Einbettungsverfahren es der Mikroemulsion mit dem antibakteriellen Material ermöglicht, sich in das Dendrimer einzubetten; wobei
die Mikroemulsion ein Co-Tensid, Wasser und ein Tensid umfasst;
das Co-Tensid eine Dodecylbenzolsulfonsäure oder ihre Salzverbindungen ist und das Tensid Laurinsäure oder Alkylglycosid ist;
das antibakterielle Material ausgewählt ist aus der Gruppe bestehend aus Benzaldehyd und Zimtaldehyd und Mischungen davon; und
das Dendrimer ein PAMAM-Dendrimer ist.

2. Verfahren zur Herstellung eines antibakteriellen Verbundstoffs nach Anspruch 1, umfassend die folgenden Schritte:
(a) Auflösen eines Tensids bzw. oberflächenaktiven Mittels (S150) und eines antibakteriellen Materials, zu tragen in einem Gewichtsverhältnis von 1:1 bis 10:1, um ein Tensid mit dem antibakteriellen Material zuzubereiten;
(b) Mischen eines Co-Tensids, Wasser und des Tensids mit dem antibakteriellen Material mit einem Gewichtsverhältnis von 1:10:0,1 - 2:10:0,5 und Rühren zur Reaktion für 1 bis 2 Stunden, um eine Mikroemulsion mit dem antibakteriellen Material zuzubereiten (S160); und
(c) Verschmelzen der Mikroemulsion mit dem antibakteriellen Material in ein Dendrimer mittels eines Verschmelzungsverfahrens, um den antibakteriellen Verbundstoff zuzubereiten (S170); wobei
das Verschmelzungsverfahrens ein Einbettungsverfahren ist;
das Einbettungsverfahren das Dendrimer zu der Mikroemulsion mit dem antibakteriellen Material hinzufügt, und das Gewichtsverhältnis des Dendrimers und der Mikroemulsion mit dem antibakteriellen Material 1:1-10:1 beträgt,
bei dem Einbettungsverfahren 6 Stunden lang gerührt wird, um die Mikroemulsion mit dem antibakteriellen Material in das Dendrimer einzubetten, um den antibakteriellen Verbundstoff zu erhalten.

3. Verfahren zur Herstellung eines antibakteriellen Verbundstoffs nach Anspruch 1, umfassend die folgenden Schritte:
(a) Auflösen eines Tensids bzw. oberflächenaktiven Mittels (S150) und eines antibakteriellen Materials, zu tragen in einem Gewichtsverhältnis von 1:1 bis 10:1, um ein Tensid mit dem antibakteriellen Material zuzubereiten;
(b) Mischen eines Co-Tensids, Wasser und des Tensids mit dem antibakteriellen Material mit einem Gewichtsverhältnis von 1:10:0,1 - 2:10:0,5 und Rühren zur Reaktion für 1 bis 2 Stunden, um eine Mikroemulsion mit dem antibakteriellen Material zuzubereiten (S160); und
(c) Verschmelzen der Mikroemulsion mit dem antibakteriellen Material in ein Dendrimer mittels eines Verschmelzungsverfahrens, um den antibakteriellen Verbundstoff zuzubereiten (S170); wobei
das Verschmelzungsverfahren ein Konjugat-Verbindungsverfahren ist; wobei
bei dem Konjugat-Verbindungsverfahren der Mikroemulsion mit dem antibakteriellen Material das Dendrimer und Vernetzungsmittel hinzugefügt werden und diese bei Raumtemperatur 5 Stunden lang reagieren, damit sich die Mikroemulsion mit dem antibakteriellen Material an das Dendrimer konjugieren kann.

4. Verfahren zur Herstellung von antibakteriellen Verbundstoffen nach Anspruch 3, wobei die Vernetzungsmittel 3-(Ethyliminomethylenamino)-N,N-dimethyl-propan-l-amin und N-Hydroxysuccinimid sind.

5. Verfahren zur Herstellung eines antibakteriellen Verbundstoffs nach Anspruch 1, umfassend die folgenden Schritte:
(a) Erhitzen und Rühren von Laurinsäure und einem Dendrimer mit einem Gewichtsverhältnis von 10:1-1:10
in Umkehrosmose-Wasser bei einer Temperatur von 50 °C - 70 °C, Zugabe eines Vernetzungsmittels, um bei Raumtemperatur 5 Stunden lang zu reagieren, damit die Laurinsäure an die Oberfläche des Dendrimers konjugiert werden kann (S210);
(b) drei- bis fünfmaliges wiederholtes Spülen mit Cyclohexan und Durchführen einer Vakuumkonzentration, um ein Dendrimer mit einer Oberfläche zu erhalten, die mit der Laurinsäure konjugiert ist (S220).
(c) Mischen des Dendrimers mit der Oberfläche, die mit der Laurinsäure konjugiert ist, eines antibakteriellen Materials, eines Tensids bzw. oberflächenaktiven Mittels und eines Co-Tensids mit einem Gewichtsverhältnis von 1:0,1:2:1-1:0,5:3:2, um den antibakteriellen Verbundstoff (S230) zu erhalten;
wobei Schritt (c) umfasst:
(c1) Zugabe des Tensids und des Co-Tensids zu dem antibakteriellen Material und Zugabe von Umkehrosmose-Wasser, kontinuierliches Rühren für 5 Stunden, dann Zugabe des Dendrimers mit der Oberfläche, die mit der Laurinsäure konjugiert ist, und kontinuierliches Rühren für 18 Stunden, um den antibakteriellen Verbundstoff zu erhalten;
wobei das oberflächenaktive Mittel Alkylglycosid ist und das Co-Tensid Dodecylbenzolsulfon oder seine Salzverbindungen ist.

6. Herstellungsverfahren für antibakterielle Verbundstoffe nach Anspruch 5, wobei die Vernetzungsmittel 3-(Ethyliminomethylenamino)-N,N-dimethyl-propan-1-amin und N-Hydroxysuccinimid sind.

## Revendications

1. Composite antibactérien appliqué sur un substrat plastique, le matériau composite antibactérien étant ajouté à un substrat plastique et le matériau composite antibactérien comprenant un matériau antibactérien, dans lequel le matériau antibactérien est encapsulé par une microémulsion pour former la microémulsion contenant le matériau antibactérien, et la microémulsion contenant le matériau antibactérien est combinée avec un dendrimère par une technique de fusion, une quantité d'un rapport en poids du dendrimère et de la microémulsion contenant le matériau antibactérien étant de 1:1 - 10:1; où la technique de fusion est une technique de combinaison conjuguée ou une technique d'encastrement, la technique de combinaison conjuguée permet à la microémulsion contenant le matériau antibactérien de se conjuguer au dendrimère, ou la technique d'encastrement permet à la microémulsion contenant le matériau antibactérien de s'encastrer dans le dendrimère; où
la microémulsion comprend un co-tensioactif, de l'eau et un tensioactif ;
le co-tensioactif est un acide dodécylbenzènesulfonique ou ses composés salins et le tensioactif est l'acide laurique ou un alkyl glycoside ;
le matériau antibactérien est choisi dans le groupe constitué par le benzaldéhyde et le cinnamaldéhyde et leurs mélanges; et
le dendrimère est un dendrimère du PAMAM.

2. Procédé de fabrication d'un composite antibactérien selon la revendication 1, comprenant les étapes suivantes :
(a) dissolution d'un agent tensioactif (S150) et d'un matériau antibactérien à transporter avec un rapport en poids de 1:1 à 10:1 pour préparer un agent tensioactif contenant le matériau antibactérien;
(b) mélanger un co-tensioactif, de l'eau et le tensioactif contenant le matériau antibactérien dans un rapport en poids de 1:10:0,1 - 2:10:0,5, et agiter pour faire réagir pendant 1 à 2 heures afin de préparer une microémulsion contenant le matériau antibactérien (S160); et
(c) fusionner la microémulsion contenant le matériau antibactérien en un dendrimère par une technique de fusion pour préparer le composite antibactérien (S170); dans laquelle
la technique de fusion est une technique d'encastrement;
la technique d'encastrement ajoute le dendrimère à la microémulsion contenant le matériau antibactérien, et le rapport en poids entre le dendrimère et la microémulsion contenant le matériau antibactérien est de 1:1-10:1,
la technique d'encastrement est agitée pendant 6 heures pour encastrer la microémulsion contenant le matériau antibactérien dans le dendrimère afin d'obtenir le composite antibactérien.

3. Procédé de fabrication d'un composite antibactérien selon la revendication 1, comprenant les étapes suivantes :
(a) dissolution d'un agent tensioactif (S150) et d'un matériau antibactérien à transporter avec un rapport en poids de 1:1 à 10:1 pour préparer un agent tensioactif contenant le matériau antibactérien;
(b) mélanger un co-tensioactif, de l'eau et le tensioactif contenant le matériau antibactérien dans un rapport en poids de 1:10:0,1 - 2:10:0,5, et agiter pour faire réagir pendant 1 à 2 heures afin de préparer une microémulsion contenant le matériau antibactérien (S160); et
(c) fusionner la microémulsion contenant le matériau antibactérien en un dendrimère par une technique de fusion pour préparer le composite antibactérien (S170); dans laquelle
la technique de fusion est une technique de combinaison conjuguée; dans laquelle
la technique de fusion ajoute le dendrimère et les agents de réticulation à la microémulsion contenant le matériau antibactérien et réagit à température ambiante pendant 5 heures pour permettre à la microémulsion contenant le matériau antibactérien de se conjuguer au dendrimère.

4. Procédé de fabrication de composites antibactériens selon la revendication 3, dans lequel les agents de réticulation sont la 3-(éthyliminométhylèneamino)-N,N-diméthyl-propan-1-amine et le N-hydroxysuccinimide.

5. Procédé de fabrication d'un composite antibactérien selon la revendication 1, comprenant les étapes suivantes :
(a) chauffage et agitation de l'acide laurique et d'un dendrimère avec la quantité du rapport en poids de 10:1 - 1:10
dans de l'eau d'osmose inverse à la température 50 °C - 70 °C, en ajoutant un agent de réticulation pour réagir à température ambiante pendant 5 heures afin de permettre à l'acide laurique de se conjuguer à la surface du dendrimère (S210) ;
b) rinçage au cyclohexane à plusieurs reprises pendant trois à cinq fois et concentration sous vide pour obtenir un dendrimère dont la surface est conjuguée à l'acide laurique (S220) .
(c) mélange du dendrimère avec la surface conjuguée à l'acide laurique, d'un matériau antibactérien, d'un tensioactif et d'un co-tensioactif dans un rapport en poids de 1:0,1:2:1 - 1:0,5:3:2 pour obtenir le composite antibactérien (S230) ;
dans lequel l'étape (c) comprend :
(cl) l'ajout du tensioactif et du co-tensioactif au matériau antibactérien, et l'ajout d'eau d'osmose inverse, en agitant en continu pendant 5 heures, puis l'ajout du dendrimère avec la surface conjuguée à l'acide laurique et l'agitation en continu pendant 18 heures pour obtenir le composite antibactérien;
dans lequel le tensioactif est un alkyl glycoside, et le co-tensioactif est le dodécylbenzènesulfonique ou ses composés salins.

6. Procédé de fabrication de composites antibactériens selon la revendication 5, dans lequel les agents de réticulation sont la 3-(éthyliminométhylèneamino)-N,N-diméthyl-propan-1-amine et le N-hydroxysuccinimide.
